# EUROPEAN PATENT APPLICATION

(11) **EP 4 783 105 A1**
(43) Date of publication of application: **29.07.2026**
(21) Application number: 24900998.6
(22) Date of filing: 02.12.2024
(51) Int. Cl.: G06T 5/70, G06T 7/13

(54) **DISPLAY DEVICE AND OPERATION METHOD THEREOF**

(30) Priority: 05.12.2023 KR 20230174612
(71) Applicant: Samsung Electronics Co., Ltd., Suwon-si, Gyeonggi-do 16677 (KR)
(72) Inventor: JUNG, Minhyo, Suwon-si, Gyeonggi-do 16677 (KR); KIM, Taehwan, Suwon-si, Gyeonggi-do 16677 (KR)
(74) Representative: Gulde & Partner
(86) International application number: PCT/KR2024/019468
(87) International publication number: WO 2025/121812

(57) **Abstract**

Provided are a display apparatus and an operating method of the same. The display apparatus includes: at least one memory storing one or more instructions; and at least one processor configured to execute the one or more instructions, wherein the one or more instructions, when executed by the at least one processor, cause the display apparatus to: obtain an input image, obtain a contour prediction result including information related to a prediction of whether a contour would be generated in an image output by the display apparatus based on the input image by inputting the input image to the contour prediction model, and based on the contour prediction result, perform at least one of a first blurring process or a second blurring process on the input image, wherein the first blurring process is different from the second blurring process.

## Description

### TECHNICAL FIELD

The disclosure relates to a display apparatus and an operating method of same. More particularly, the disclosure relates to a display apparatus for reducing a contour according to color banding, and an operating method of the display apparatus.

### BACKGROUND ART

A display apparatus is an apparatus for processing an image signal provided from an image signal supply source and displaying the same on a display, and includes a television receiver that receives and displays an image signal provided from a broadcasting station. Here, the image signal may correspond to an input image.

When the display apparatus outputs the input image on the display, the display apparatus may process the image to increase user satisfaction, aesthetics, and a three-dimensional effect.

For example, the display apparatus may perform a blurring process on the image. Blurring (or a blurring process) may be performed to blur the image by reducing sharpness of the image and providing a soft blurring effect. The display apparatus may output, on the display, the blur-processed image (blurred image).

When the image is displayed on the display, a color banding phenomenon may occur in the image. The color banding phenomenon is a phenomenon that occurs when a color of each pixel in an image including a plurality of pixels is rounded to the nearest color among digital color levels. An image with color banding has a contour (or an outline, a boundary line, or a contour line) that appears like a band rather than a smooth change in gradation (or gray scale).

In particular, it is highly likely that color banding may occur when a difference between color levels is high at a boundary of two adjacent regions. For example, it is highly likely that color banding may be generated in an image on which a blurring process has been performed or in an image in which a gradual color change is prominent, such as a photograph of a sunset sky.

Color banding and a contour according to color banding reduce user visibility, and thus, technology for minimizing a contour in an image is being developed.

### DISCLOSURE OF INVENTION

### Solution to Problem

According to an aspect of the disclosure, a display apparatus includes: at least one memory storing one or more instructions; and at least one processor configured to execute the one or more instructions.

According to an aspect of the disclosure, the one or more instructions, when executed by the at least one processor, cause the display apparatus to obtain an input image

According to an aspect of the disclosure, the one or more instructions, when executed by the at least one processor, cause the display apparatus to obtain from a contour prediction model a contour prediction result including information related to a prediction of whether a contour would be generated in an image output by the display apparatus based on the input image by inputting the input image to the contour prediction model.

According to an aspect of the disclosure, the one or more instructions, when executed by the at least one processor, cause the display apparatus to, based on the contour prediction result, perform at least one of a first blurring process or a second blurring process on the input image, wherein the first blurring process is different from the second blurring process.

According to an aspect of the disclosure, an operating method of a display apparatus includes: obtaining an input image; obtaining from a contour prediction model a contour prediction result including information related to a prediction of whether a contour would be generated in an image output by the display apparatus based on the input image by inputting the input image to the contour prediction model; and based on the contour prediction result, performing at least one of a first blurring process or a second blurring process on the input image, wherein the first blurring process is different from the second blurring process.

According to an aspect of the disclosure, a non-transitory computer readable medium having recorded thereon a program for executing, on a computer, at least one operating method of a display apparatus may be provided.

### BRIEF DESCRIPTION OF DRAWINGS

FIG. 1 is a diagram for describing an operation in which a display apparatus outputs a blurred image, according to an embodiment of the disclosure;
FIG. 2 is a diagram for describing color banding and a contour according to the color banding, according to an embodiment of the disclosure;
FIG. 3 is a flowchart of an operating method of a display apparatus for preventing generation of a contour, according to an embodiment of the disclosure;
FIG. 4 is a flowchart of an operating method of a display apparatus for preventing generation of a contour, according to an embodiment of the disclosure;
FIG. 5 is a block diagram of a configuration of a display apparatus according to an embodiment of the disclosure;
FIG. 6 is a block diagram for describing a first blurring process according to an embodiment of the disclosure;
FIG. 7 is a block diagram for describing an example of a second blurring process according to an embodiment of the disclosure;
FIG. 8 is a block diagram for describing an example of a second blurring process according to an embodiment of the disclosure;
FIG. 9 is a diagram for describing the second blurring process of FIG. 8;
FIG. 10 is a block diagram for describing an example of a second blurring process according to an embodiment of the disclosure;
FIG. 11 is a block diagram for describing a blurring process for a video image, according to an embodiment of the disclosure;
FIG. 12 is a flowchart of a method of providing training data to a contour prediction model, according to an embodiment of the disclosure;
FIG. 13 is a diagram for describing a method of performing reinforcement learning on a contour prediction model by using training data, according to an embodiment of the disclosure;
FIG. 14 illustrates an example of a situation in which a display apparatus performs a blurring process on an image, according to an embodiment of the disclosure;
FIG. 15 is a schematic block diagram of a display apparatus according to an embodiment of the disclosure; and
FIG. 16 is a detail block diagram of a display apparatus according to an embodiment of the disclosure.

### MODE FOR THE INVENTION

Throughout the disclosure, the expression "at least one of a, b, or c" indicates only a, only b, only c, both a and b, both a and c, both b and c, all of a, b, and c, or variations thereof.

Hereinafter, an embodiment of the disclosure will be described in detail with reference to the accompanying drawings such that one of ordinary skill in the art may implement the disclosure. However, the disclosure may be implemented in various different forms and is not limited to the embodiment of the disclosure described herein.

Terms used in the disclosure are described as general terms currently used in consideration of functions described in the disclosure, but the terms may have different meanings according to an intention of one of ordinary skill in the art, precedent cases, or the appearance of new technologies. Thus, the terms used herein should not be interpreted only by its name, but have to be defined based on the meaning of the terms together with the description throughout the specification.

Also, the terms used in the disclosure are only used to describe a specific embodiment of the disclosure, and are not intended to limit the disclosure.

Throughout the specification, when a part is "connected" to another part, the part may not only be "directly connected" to the other part, but may also be "electrically connected" to the other part with another element in between.

"The" and similar directives used in the present specification, in particular, in claims, may indicate both singular and plural. Also, unless there is a clear description of an order of operations describing a method according to the disclosure, the operations described may be performed in a suitable order. The disclosure is not limited by the order of description of the described operations.

The phrases "an embodiment of the disclosure" appearing in various places in this specification are not necessarily all referring to the same embodiment of the disclosure.

An embodiment of the disclosure may be represented by functional block configurations and various processing operations. Some or all of these functional blocks may be implemented by various numbers of hardware and/or software configurations that perform particular functions. For example, the functional blocks of the disclosure may be implemented by one or more microprocessors or by circuit configurations for a certain function. Also, for example, the functional blocks of the disclosure may be implemented in various programming or scripting languages. The functional blocks may be implemented by algorithms executed in one or more processors. In addition, the disclosure may employ general techniques for electronic environment setting, signal processing, and/or data processing. Terms such as "mechanism", "element", "means", and "configuration" may be used widely and are not limited as mechanical and physical configurations.

In addition, a connection line or a connection member between components shown in drawings is merely a functional connection and/or a physical or circuit connection. In an actual device, connections between components may be represented by various functional connections, physical connections, or circuit connections that are replaceable or added.

The processor may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In addition, terms such as "unit", "-or/-er", and "module" described in the specification denote a unit that processes at least one function or operation, which may be implemented in hardware or software, or implemented in a combination of hardware and software.

Also, the term "user" in the specification denotes a person using a display apparatus and may include a consumer, an assessor, a viewer, an administrator, and an installation engineer. The term "manufacturer" or "provider" in the specification may denote a manufacturer that manufactures a display apparatus and/or a component included in the display apparatus.

In the disclosure, an "image" may include a still image, graphics, a picture, a frame, a moving image including a plurality of consecutive still images, or a video.

In the disclosure, a "neural network" is a representative example of an artificial neural network model simulating brain nerves, and is not limited to an artificial neural network model using a specific algorithm. The neural network may also be referred to as a deep neural network.

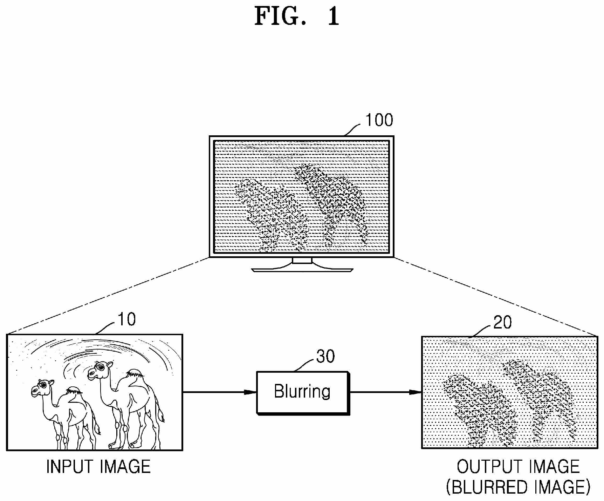

FIG. 1 is a diagram for describing an operation in which a display apparatus 100 outputs a blurred image, according to an embodiment of the disclosure.

Referring to FIG. 1, the display apparatus 100 may be an apparatus including a display to display image content, video content, game content, graphic content, or the like. For example, the display apparatus 100 may include any type of electronic devices capable of receiving and outputting content, such as various smart devices, for example, a network television (TV), a smart TV, an Internet TV, a web TV, an Internet protocol TV (IPTV), a PC, and a smartphone. The display apparatus 100 may be referred to as a display apparatus in that content is received and displayed, and may also be referred to as a content receiving device, a sink device, an electronic device, or a computing device.

The display apparatus 100 according to an embodiment of the disclosure may perform an image process. For example, the display apparatus 100 may perform an image process on an input image 10 to generate an output image 20. The display apparatus 100 may output the output image 20 on a display. Here, an image may include a graphic image, a video image, and a composite image between graphics and video.

The display apparatus 100 according to an embodiment of the disclosure may perform a blurring process 30. The blurring process 30 may be performed to blur an image by reducing sharpness of the image and providing a soft blurring effect. The display apparatus 100 may perform the blurring process 30 on the input image 10 and generate a blur-processed image (blurred image). A blurred image may have a gradation effect in which an outline of an object or the like included in an image is blurred and colors transition smoothly. The display apparatus 100 may output the blurred image on the display. Here, the blurred image may correspond to the output image 20.

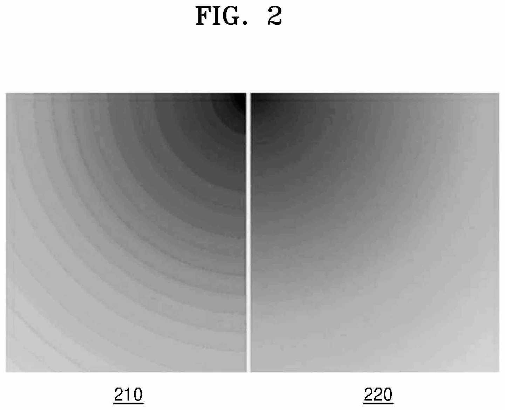

According to an embodiment of the disclosure, color banding may occur in the blurred image. The blurred image may include a contour according to the color banding. This will be described in further detail with reference to FIG. 2.

FIG. 2 is a diagram for describing color banding and a contour according to the color banding, according to an embodiment of the disclosure.

FIG. 2 illustrates a first image 210 and a second image 220, which both exhibit a significant color level difference at a boundary between two adjacent regions. For example, the first image 210 and the second image 220 may be blurred or feature a gradual color change, such as a sunset photograph. The first and second images 210 and 220 may be susceptible to color banding.

The first image 210 is an example of an image including color banding and a contour according to the color banding, and the second image 220 is an example of an image in which color banding and a contour according to the color banding are minimized.

For example, a graphic image may include a plurality of pixels. Each of the plurality of pixels may be represented by a gray scale. For example, when the graphic image has 8-bit gray scale data, each pixel may be represented in one color level from among 256 levels.

Also, each of the plurality of pixels may be represented by RGB data. For example, when the graphic image has 8-bit RGB data, red (R) data, green (G) data, and blue (B) data may each be represented in one color level from among 256 levels. A color may be represented when red, green, and blue, which are represented in respective levels, are mixed. For example, when the RGB data is (255, 255, 255), white is represented, and when the RGB data is (0, 0, 0), black is represented.

For example, in the first image 210, a color of a pixel at a boundary of two adjacent color regions may be rounded to the nearest color level. For example, a color level may not gradually increase but may increase stepwise (or in steps) when RGB data of each pixel is rounded to the nearest color level. Accordingly, a boundary line may be present for each color region in the first image 210.

For example, the second image 220 may be an image in which a color level gradually increases while a boundary line is not present for each color region.

Hereinafter, examples in which a contour is generated as in the first image 210 when the display apparatus 100 displays a blurred image will be described in detail.

Depending on factors such as the display resolution of the display apparatus 100, the number of bits, and performance of a processor, a contour may appear at a gray scale boundary of a blurred image even after a graphic process (e.g., a blurring process). It may be difficult to remove the contour from the image after the graphic process.

For example, in the display apparatus 100, the number of bits of data on which the graphic process is performed may be different from the number of bits of a display panel to which the data is output. For example, 8 bits are processed during the graphic process, but 10 bits may be processed in the display panel. For example, 8-bit RGB data may represent about 16 million color levels, whereas 10-bit RGB data may represent about one billion color levels.

When the display apparatus 100 converts an 8-bit graphic image into a 10-bit graphic image, more colors need to be represented, and thus, color banding that did not occur during the graphic process may occur. For example, the display apparatus 100 may perform a dithering process of assigning a dither that is noise data replacing a gray scale difference (e.g., a difference between about 16 million color level and about billion color levels). The dithering process is one post-processing method for removing color banding, but noise may increase in proportion to the number of dithers. Also, a dithering degree may vary according to the performance of the processor of the display apparatus 100, and color banding may still occur.

For example, when the display apparatus 100 outputs an image, an image having a same color level may be displayed brighter or darker depending on a display panel. In particular, for a black and low gray scale image, color banding may be more visible or less visible depending on a display panel.

For example, viewing angles vary for each display panel of the display apparatus 100, and thus, a luminance increasing ratio may vary according to viewing angles. In this case, when the display apparatus 100 outputs a blurred image, color banding may be more visible or less visible to a user. Also, color banding may be more visible or less visible depending on a panel specification of the display apparatus 100.

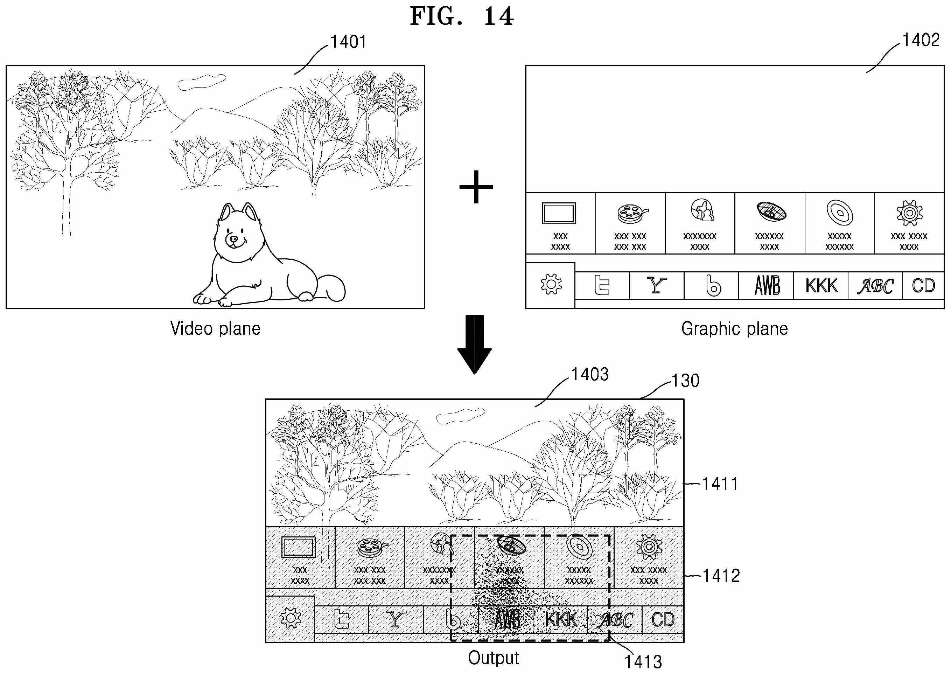

Also, for example, the display apparatus 100 may output a composite image obtained by combining or mixing a graphic image with a video image. The display apparatus 100 may apply a blurring effect on the composite image. A contour present in the composite image on which the blurring effect has been applied may not be sufficiently removed according to a general blurring process algorithm. The blurring effect of the composite image will be described later with reference to FIG. 14.

As such, a contour generated after the blurring process and a contour generated at hardware may not be sufficiently removed according to a general blurring process algorithm.

The display apparatus 100 according to an embodiment of the disclosure may use a blurring algorithm for minimizing generation of a contour, so as to prevent a contour generated after the blurring process.

For example, the display apparatus 100 may predict in advance whether color banding may occur when the blurring process is performed on an original image, and perform different blurring processes on the original image depending on a prediction result.

For example, in a case where it is predicted that color banding may occur when the blurring process is performed on the original image, the display apparatus 100 may apply a blurring algorithm for minimizing generation of a contour. The display apparatus 100 may differently perform a blurring process on the original image to minimize color banding of a blurred image output on the display. For example, the display apparatus 100 may output the second image 220 instead of outputting the first image 210. The user may view, through the display apparatus 100, an image in which color banding and a contour are minimized.

Hereinafter, a method by which the display apparatus 100 according to an embodiment of the disclosure minimizes color banding and a contour while processing a blurred image will be described.

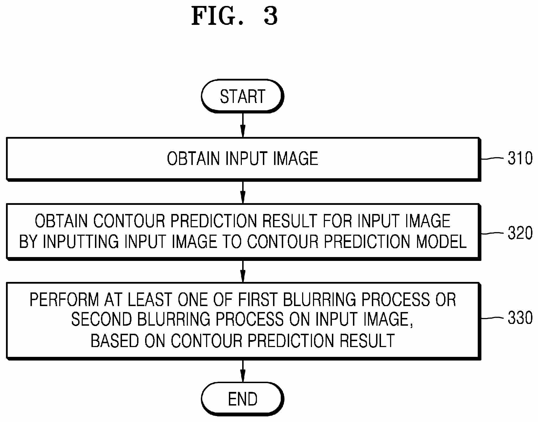

FIG. 3 is a flowchart of an operating method of the display apparatus 100 for preventing generation of a contour, according to an embodiment of the disclosure.

Referring to FIG. 3, in operation 310, the display apparatus 100 may obtain an input image.

According to an embodiment of the disclosure, the display apparatus 100 may obtain the input image having a certain format. For example, the input image having the certain format may include a video image, a graphic image, or the like.

The certain format may denote a format with a certain color space that may be indicated by the display apparatus 100, for the display apparatus 100 to output an image or store the image in memory before outputting the image. For example, the input image may have an image format of YUV, RGB, or RGBA. For example, the input image may be an image of a YUV format stored in a video plane or an image of an RGB or RGBA format stored in a graphic plane. Each pixel value may be written in the input image.

According to an embodiment of the disclosure, the display apparatus 100 may obtain the input image through a capture tool. The display apparatus 100 may store an image that is pre-stored in a buffer, in a separate buffer through the capture tool. The capture tool may be software, hardware, or a combination thereof for storing an image in which a pixel value is written, in the separate buffer.

In operation 320, the display apparatus 100 may obtain a contour prediction result for the input image by inputting the input image to a contour prediction model.

The contour prediction model according to an embodiment of the disclosure may be a model trained to predict a contour of an image. For example, the contour prediction model may determine whether there is a possibility of generation of a contour when a blurring process is performed on an original image. The contour prediction model may be applied to the original image on which a blurring process is not performed.

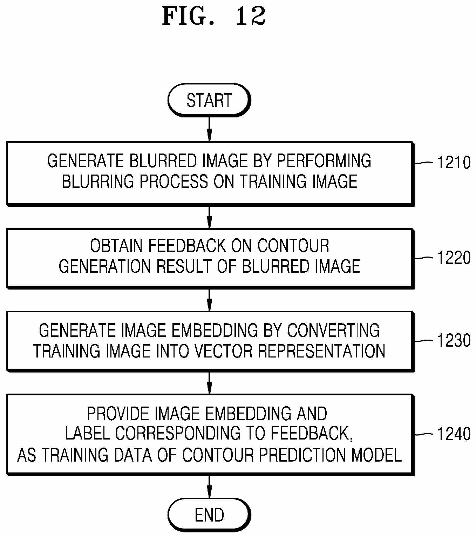

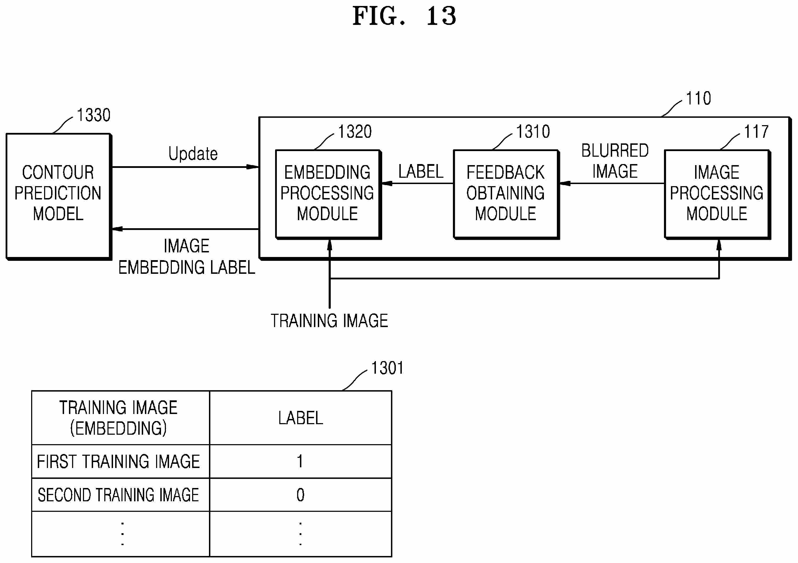

The contour prediction model according to an embodiment of the disclosure may correspond to a reinforcement learning model. The reinforcement learning model may be a learning model using feedback on whether a result of situation determination according to learning is correct. For example, the contour prediction model may be trained by using, as training data, a pair of a training image and feedback on the training image. The feedback on the training image may indicate rating, a score, a reward, and the like related to whether a contour is present in a blurred image. An operation in which the contour prediction model is reinforcement-learned will be described later with reference to FIGS. 12 and 13.

The contour prediction model according to an embodiment of the disclosure is a model pre-trained to output a contour prediction result for an image, and may also be referred to as a trained reinforcement learning model or a deployed reinforcement learning model.

The display apparatus 100 according to an embodiment of the disclosure may obtain the contour prediction result for the input image by using the contour prediction model. For example, the display apparatus 100 may input the input image to the contour prediction model. An input of the contour prediction model may be the original image on which the blurring process is not performed.

The display apparatus 100 according to an embodiment of the disclosure may generate image embedding by converting the input image to a vector representation, and input the image embedding to the contour prediction model. The image embedding denotes data in which input image information is compressed. The display apparatus 100 may reduce data throughput of the display apparatus 100 by inputting the image embedding obtained by converting the input image to the vector representation, instead of inputting the input image to the contour prediction model. The image embedding will be described in detail later with reference to FIG. 12.

The contour prediction model according to an embodiment of the disclosure may output the contour prediction result including information of predicting whether a contour is to be generated in the input image.

For example, the contour prediction model may output a prediction result as a probability value. For example, the contour prediction model may output a high probability value in response to an image with a contour generation possibility. The contour prediction model may output a low probability value in response to an image with no or low contour generation possibility. The probability value may be compared with a threshold.

Alternatively, for example, the contour prediction model may output a prediction result in a binary value, such as 0 or 1. For example, the contour prediction model may output 1 in response to an image with a contour generation possibility. The contour prediction model may output 0 in response to an image with no or low contour generation possibility. However, a form of the contour prediction result is not limited to above examples.

In operation 330, the display apparatus 100 may perform at least one of first blurring process or a second blurring process on the input image, based on the contour prediction result.

According to an embodiment of the disclosure, the display apparatus 100 may differently perform the blurring process on the original image according to the contour prediction result. For example, the display apparatus 100 may apply the first blurring process on an image with no or low contour generation possibility and apply the second blurring process on an image with a contour generation possibility or a high contour generation possibility.

For example, when a prediction result of the contour prediction model is output as a probability value, the display apparatus 100 may determine an image in which the probability value that is the prediction value is equal to or greater than a threshold as an image with a contour generation possibility, and determine an image in which the probability value that is the prediction value is less than the threshold as an image with no contour generation possibility.

For example, when the prediction result of the contour prediction model is output in a binary value, such as 0 or 1, the display apparatus 100 may determine an image in which the prediction value is 1 as an image with a contour generation possibility, and determine an image in which the prediction value is 0 as an image with no contour generation possibility.

The first blurring process and the second blurring process may be different from each other. The first blurring process and the second blurring process may each be realized by software, hardware, or a combination thereof.

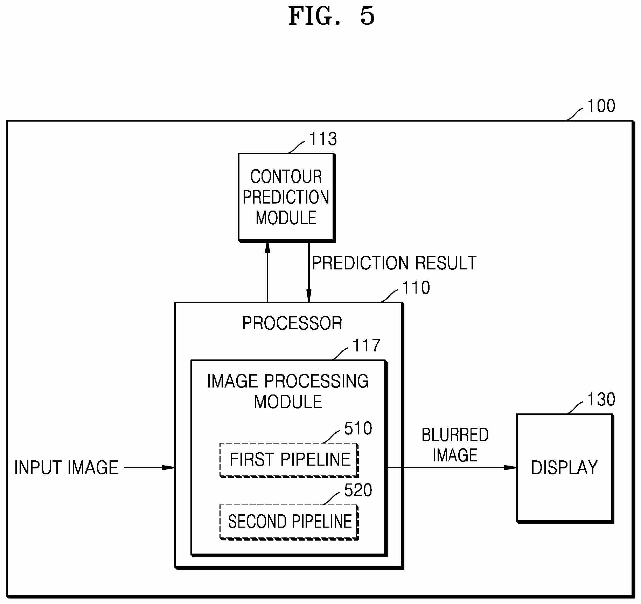

For example, the display apparatus 100 may generate the blurred image of the input image through separate paths or separate pipelines, according to the contour prediction result. For example, the display apparatus 100 may include a first pipeline for generating the blurred image by receiving the image with no or low contour generation possibility. The display apparatus 100 may include a second pipeline for generating the blurred image by receiving the image with the contour generation possibility or high contour generation possibility. The first blurring process may correspond to a first pipeline 510 of FIG. 5 and the second blurring process may correspond to a second pipeline 520 of FIG. 5.

The first blurring process according to an embodiment of the disclosure may include a general operation for performing a blurring process on an image. For example, the first blurring process may include downscaling, blurring, and upscaling of the input image. Also, the first blurring process according to an embodiment of the disclosure may further include dithering of the blurred image.

The second blurring process according to an embodiment of the disclosure may include a blurring process for minimizing generation of a contour. The second blurring process may include an operation of pre-reducing a contour generated at hardware. For example, in a same original image, an image on which the second blurring process has been performed may have fewer contours than an image on which the first blurring process has been performed.

For example, the second blurring process may further include dimming for reducing a color gray scale of an image, contour interpolation for alleviating a boundary region where a contour exists, and an operation of performing a blurring process by reducing blurring intensity. For example, the second blurring process may further include the above operations in addition to the general operation (e.g., the first blurring process) for the blurring process.

For example, the second blurring process may include a first sub-process of further performing the dimming after performing the downscaling, the blurring, and the upscaling on the input image. The first sub-process may perform the dimming for reducing the color gray scale of the blurred image to minimize a contour visible to the user.

For example, the second blurring process may include a second sub-process of further performing the contour interpolation after performing the downscaling, the blurring, and the upscaling on the input image. The contour interpolation may include an operation of alleviating a contour of a boundary region by interpolating a color gray scale of each pixel for the boundary region where a color difference between pixels belonging to the blurred image is large. The second sub-process may reduce a contour in the blurred image by performing the contour interpolation.

For example, the second blurring process may include a third sub-process of performing a blurring process by adjusting blurring intensity. For example, the third sub-process may include the downscaling, the blurring, and the upscaling for the input image, wherein relatively low blurring intensity may be set. For example, second blurring intensity used for the third sub-process (the second blurring process) may be lower than first blurring intensity used for the first blurring process. The blurring intensity may be adjusted by a scaling factor, a filter size for blurring, or the like. The third sub-process may minimize a contour visible to the user by reducing the blurring intensity.

The first sub-process, the second sub-process, and the third sub-process according to an embodiment of the disclosure may be realized in individual paths or individual pipelines. For example, the first sub-process may correspond to a first sub-pipeline 521, the second sub-process may correspond to a second sub-pipeline 522, and the third sub-process may correspond to a third sub-pipeline 523.

The display apparatus 100 according to an embodiment of the disclosure may predict a contour (or color banding) generated when a blurring effect is applied to the input image, and apply an adaptive blurring effect accordingly. The display apparatus 100 may prevent a contour generated after the graphic process (e.g., the blurring process). Also, operation costs and operation time may be reduced by pre-performing different blurring processes on the original image before applying the blurring effect.

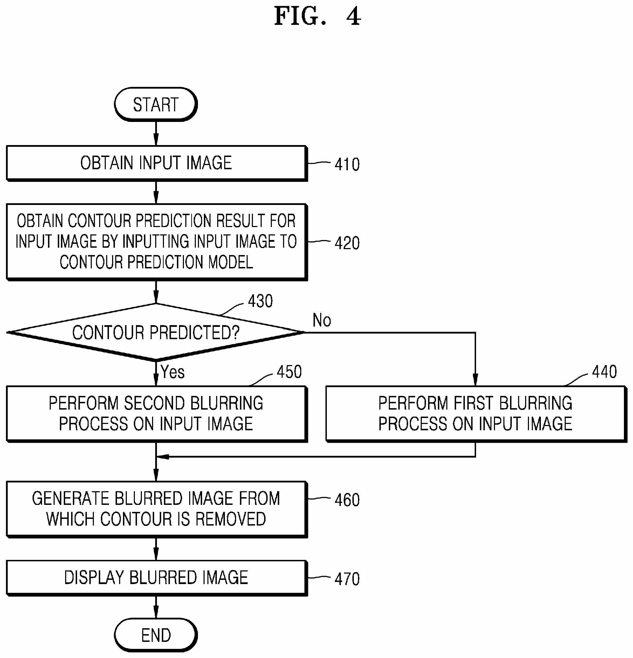

FIG. 4 is a flowchart of an operating method of the display apparatus 100 for preventing generation of a contour, according to an embodiment of the disclosure.

Referring to FIG. 4, operation 410 may correspond to operation 310 of FIG. 3 and operation 420 may correspond to operation 320 of FIG. 3.

In operation 430, the display apparatus 100 may perform operation 440 or operation 450, based on a prediction result of whether there is possibility that a contour may be generated.

In operation 440, the display apparatus 100 may perform the first blurring process on the input image, based on that generation of a contour is not predicted.

In operation 450, the display apparatus 100 may perform the second blurring process on the input image, based on that generation of a contour is predicted.

For example, when the contour prediction model outputs the prediction result as a probability value, the display apparatus 100 may compare the probability value with a threshold. When the probability value indicating the prediction result is less than the threshold, the display apparatus 100 may perform the first blurring process on the input image. When the probability value is equal to or greater than the threshold, the display apparatus 100 may perform the second blurring process on the input image.

Alternatively, for example, the contour prediction model may output the prediction result in 0 or 1. 0 corresponds to an image with a low contour generation possibility and 1 corresponds to an image with a contour generation possibility, or vice versa. When the prediction result is 0, the display apparatus 100 may perform the first blurring process on the input image. When the prediction result is 1, the display apparatus 100 may perform the second blurring process on the input image.

The first blurring process and the second blurring process have been described above with reference to operation 330 of FIG. 3.

In operation 460, the display apparatus 100 may generate a blurred image from which a contour is removed.

In operation 470, the display apparatus 100 may display the blurred image. The display apparatus 100 may minimize generation of a contour generated when outputting the blurred image on the display panel. For example, the display apparatus 100 may apply a blurring process for minimizing a contour, on the input image with a high possibility of generation of a contour at hardware after the graphic process.

For example, color banding occurred when the display apparatus 100 converts an 8-bit graphic image into a 10-bit graphic image may be minimized.

For example, color banding occurred due to a luminance increasing ratio difference caused by different viewing angles of display panels of the display apparatus 100 may be minimized.

For example, color banding occurred when the display apparatus 100 outputs a composite image may be minimized.

FIG. 5 is a block diagram of a configuration of the display apparatus 100 according to an embodiment of the disclosure.

Referring to FIG. 5, the display apparatus 100 according to an embodiment of the disclosure may include a processor 110, a contour prediction model 113, an image processing module 117, and a display 130.

The processor 110 may obtain an input image having a certain format. For example, the input image may include a graphic image stored in a graphic plane and/or a video image stored in a video plane. The graphic plane may process an image in an RGB or RGBA color space. The video plane may process an image in a YUV color space. The image stored in the video plane or the graphic plane may be data on which a pixel value is written.

For example, the processor 110 may obtain the input image through a capture tool. The capture tool may be software, hardware, or a combination thereof for storing an image in which a pixel value is written, in the separate buffer. For example, the capture tool may include a main capture tool, a subscaler capture tool, a post capture tool, a graphic capture tool, or the like, but is not limited thereto.

According to an embodiment of the disclosure, the processor 110 may input the input image to the contour prediction model 113. The contour prediction model 113 may be an artificial neural network model trained to infer generation of a contour when a blurring process is performed on the input image, through a neural network operation. The contour prediction model 113 may receive the input image and output a contour prediction result of the input image. The contour prediction result may include information about generation of a contour of the input image.

An artificial neural network may include a deep neural network (DNN) and may include, for example, a convolutional neural network (CNN), a DNN, a recurrent neural network (RNN), a restricted Boltzmann machine (RBM), a deep belief network (DBN), a bidirectional recurrent DNN (BRDNN), or deep Q-networks (DQN), but is not limited thereto.

The artificial neural network may be a supervised learning neural network model, an unsupervised learning neural network model, or a reinforcement learning model.

The processor 110 according to an embodiment of the disclosure may generate image embedding by converting the input image to a vector representation. The processor 110 may input, to the contour prediction model 113, the image embedding including input image information, instead of the input image.

According to an embodiment of the disclosure, the contour prediction model 113 may transmit the contour prediction result to the processor 110. The processor 110 may differently perform a blurring process on the input image, based on the contour prediction result received from the contour prediction model 113.

The processor 110 may include a processor configured to control general operations of the display apparatus 100. The processor 110 may include at least one processor. The processor 110 may include at least one of a central processing unit (CPU), a graphics processing unit (GPU), an accelerated processing unit (APU), a many integrated core (MIC), a digital signal processor (DSP), or a neural processing unit (NPU).

According to an embodiment of the disclosure, the processor 110 and the contour prediction model 113 may be implemented together as one chip. For example, the processor 110 and the contour prediction model 113 may be implemented in the form of an embedded system on chip (SoC). The processor 110 may perform operations for controlling the contour prediction model 113. For example, the processor 110 may execute the contour prediction model 113 stored in memory.

Also, according to an embodiment of the disclosure, the processor 110 may include a GPU configured to process data used to generate an image signal or an image. Here, "processing" may denote performing at least one operation from among receiving, converting (in detail, converting a format, a size, and/or a characteristic), generating, and processing an image by using a signal or data.

According to an embodiment of the disclosure, the processor 110 may include the image processing module 117. The image processing module 117 may include various paths or pipelines for performing generating and/or processing of an image. For example, the image processing module 117 may perform processing and generating of an image through independent pipelines (or paths). The image processing module 117 may be operated by the GPU but is not limited thereto. For example, the image processing module 117 may be realized by hardware, software, or a combination of hardware and software.

According to an embodiment of the disclosure, the image processing module 117 may include at least two pipelines for performing the blurring process. For example, the image processing module 117 may include the first pipeline 510 for performing a first blurring process and the second pipeline 520 for performing a second blurring process. A blurred image generated through the first pipeline 510 may be different from a blurred image generated through the second pipeline 520.

According to an embodiment of the disclosure, the processor 110 may perform different blurring processes on the input images according to the contour prediction result received from the contour prediction model 113.

For example, the processor 110 may perform the first blurring process when generation of a contour is not predicted for the input image. The processor 110 may generate a blurred image of the input image by using the first pipeline 510.

For example, the processor 110 may perform the second blurring process when generation of a contour is predicted for the input image. The processor 110 may generate a blurred image of the input image by using the second pipeline 520.

According to an embodiment of the disclosure, an operation of determining an appropriate pipeline for each input image may be performed directly by the image processing module 117 or performed through a separate management module included in the processor 110.

According to an embodiment of the disclosure, the processor 110 may transmit the blurred image generated through the image processing module 117, to the display 130. The processor 110 may control the display 130 to output the blurred image.

The display 130 outputs an image on a screen. The display 130 may output an image corresponding to video data or an image signal. For example, the display 130 may output the blurred image. The blurred image output to the display 130 may have a minimized contour and minimized color banding.

According to an embodiment of the disclosure, data generated and/or processed in each pipeline may have a graphic format (e.g., RGB or RGBA). When the input image has YUV that is a video format, the processor 110 may perform format conversion on the input image before transmitting the input image to each pipeline. Here, YUB is an abbreviation used to refer to an analog luminance signal and a chrominance signal in a component video system, wherein Y represents contrast (brightness and darkness), U(Cb) represents a red component in contrast, and V(Cr) represents a blue component in contrast.

Hereinafter, a first pipeline and a second pipeline according to an embodiment of the disclosure will be described in detail.

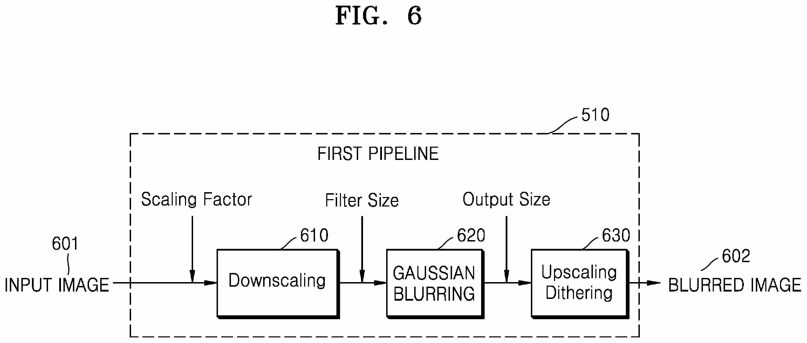

FIG. 6 is a block diagram for describing a first blurring process according to an embodiment of the disclosure.

FIG. 6 illustrates the first pipeline 510 corresponding to the first blurring process. The first pipeline 510 may include downscaling 610, blurring 620, and upscaling 630 for an input image 601. In the upscaling 630, the first pipeline 510 may further include dithering. The first pipeline 510 may generate a blurred image 602 by processing the input image 601.

The input image 601 may be an image having an RGB format, an RGBA format, and/or a YUV format. The input image 601 may be an image with no or low contour generation possibility when a blurring process is performed thereon.

The downscaling 610 may be a process of reducing a size of the input image 601. The downscaling 610 may reduce an image by 1/scaling factor by using a scaling factor determined for the image.

Blurring intensity may be determined through the scaling factor of the downscaling 610. For example, when a scaling factor is high, blurring intensity may be high. For example, when a scaling factor is low, blurring intensity may be low. When blurring intensity increases, a blurring effect on a blurred image may increase.

The blurring 620 may be a process of assigning a blurring effect to the input image 601. According to an embodiment of the disclosure, the blurring 620 may be Gaussian blurring using a Gaussian filter, but is not limited thereto. The blurring 620 may be a separable filter. The separable filter may include a 2-pass filter including a horizontal pass and a vertical pass.

Blurring intensity may be determined through a filter size of the blurring 620. For example, blurring intensity may be high when a filter size is large. For example, blurring intensity may be low when a filter size is small.

The upscaling 630 may be a process of returning an image back to an original size. The upscaling 630 may increase a size of a blur-processed image according to an output size of a display panel.

According to an embodiment of the disclosure, dithering may be performed to reduce a color banding effect generated when upscaling is performed. The dithering may be a process of assigning a dither that is a small amount of noise data so as to minimize a quantization error. A contour present in an image may be removed through the dithering.

It is illustrated that dithering is performed together with upscaling, but an embodiment of the disclosure is not limited thereto, and the dithering may be performed separate from the upscaling.

The display apparatus 100 may input the input image 601 to the first pipeline 510 when generation of a contour is not predicted for the input image 601. The display apparatus 100 may generate the blurred image 602 according to the first pipeline 510.

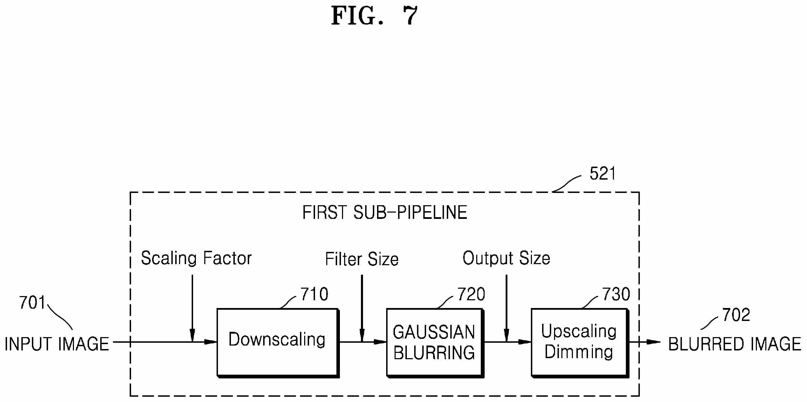

FIG. 7 is a block diagram for describing an example of a second blurring process according to an embodiment of the disclosure. Details that overlap those of FIG. 6 are not provided again in FIG. 7.

FIG. 7 illustrates the second pipeline 520 corresponding to the second blurring process. The second pipeline 520 may include the first sub-pipeline 521. The first sub-pipeline 521 may include downscaling 710, blurring 720, and upscaling 730 for an input image 701. In the upscaling 730, the first sub-pipeline 521 may further include dimming. The first sub-pipeline 521 may generate a blurred image 702 by processing the input image 701.

Here, the downscaling 710, the blurring 720, and the upscaling 730 may respectively correspond to the downscaling 610, the blurring 620, and the upscaling 630 of FIG. 6.

The input image 701 may be an image having an RGB format, an RGBA format, and/or a YUV format. The input image 701 may be an image with a contour generation possibility when a blurring process is performed thereon.

According to an embodiment of the disclosure, dimming may be performed to reduce a color banding effect on a blurred image. The dimming may be a process of reducing a color gray scale of an image. For example, the dimming may reduce an RGB color level for each pixel of an image. Brightness, sharpness, or the like of an image may be reduced through the dimming. Generation of a contour may be minimized in the image in which the brightness or sharpness is reduced.

It is illustrated that dimming is performed together with upscaling, but an embodiment of the disclosure is not limited thereto, and the dimming may be performed separate from the upscaling. Also, the first sub-pipeline 521 may further include dithering.

According to an embodiment of the disclosure, when generation of a contour is predicted in the input image 701, the processor 110 may input the input image 701 to the first sub-pipeline 521 that is an example of the second pipeline 520. The processor 110 may generate the blurred image 702 according to the first sub-pipeline 521.

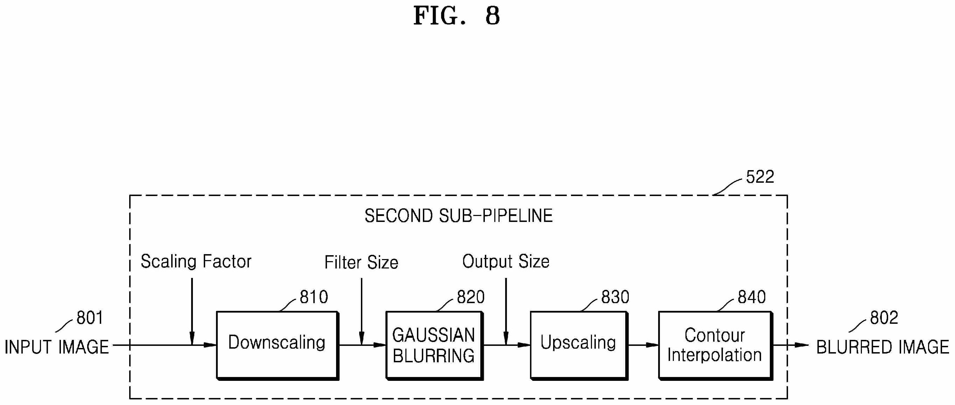

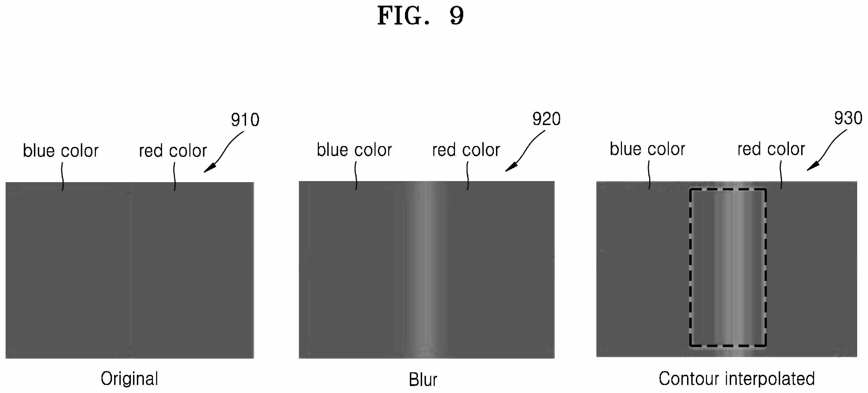

FIG. 8 is a block diagram for describing an example of a second blurring process according to an embodiment of the disclosure. FIG. 9 is a diagram for describing the second blurring process of FIG. 8. Details that overlap those of FIG. 6 are not provided again in FIGS. 8 and 9.

FIG. 8 illustrates the second pipeline 520 corresponding to the second blurring process. The second pipeline 520 may include the second sub-pipeline 522. The second sub-pipeline 522 may include downscaling 810, blurring 820, and upscaling 830 for an input image 801. The second sub-pipeline 522 may further include contour interpolation 840. The second sub-pipeline 522 may generate a blurred image 802 by processing the input image 801.

Here, the downscaling 810, the blurring 820, and the upscaling 830 may respectively correspond to the downscaling 610, the blurring 620, and the upscaling 630 of FIG. 6.

The input image 801 may be an image having an RGB format, an RGBA format, and/or a YUV format. The input image 801 may be an image with a contour generation possibility when a blurring process is performed thereon.

According to an embodiment of the disclosure, the contour interpolation 840 may be performed in the second sub-pipeline 522 to reduce a color banding effect on the blurred image 802. The contour interpolation 840 may include an operation of alleviating a contour of a boundary region by interpolating a color gray scale of each pixel for the boundary region where a color difference between pixels belonging to the blurred image 802 is large.

For example, the processor 110 may detect a boundary region in which a gray scale difference between a first pixel and a second pixel included in an image is equal to or greater than a pre-set value. The processor 110 may interpolate an intermediate gray scale between a gray scale of the first pixel and a gray scale of the second pixel in the boundary region. The processor 110 may alleviate a contour in the boundary region by interpolating a boundary region where a color level difference is large to the intermediate gray scale.

Referring to FIG. 9, an original image 910 corresponding to the input image 801, an intermediate image 920 on which a blurring process has been performed, and an interpolation image 930 corresponding to the blurred image 802 are illustrated.

The original image 910 may have a color combination in which a gray scale difference is equal to or greater than a pre-set value. For example, a difference in color levels between pixels belonging to the original image 910 may exceed a pre-set color level, in a boundary region (or a boundary line) of the original image 910. For example, when a first side has B pixel (0, 0, 255) and a second side as an R pixel (255, 0, 0), based on the boundary region, the above color combination may be obtained.

When a change in a color level of the original image 910 is rapid, a contour of a blur-processed image may be prominent. For example, the intermediate image 920 obtained through blurring 820 of the original image 910 may include a contour in a boundary region.

When contour interpolation is performed on the intermediate image 920, a contour of the interpolation image 930 may be minimized. For example, the processor 110 may calculate an intermediate gray scale between a color level of a first pixel located at the first side and a color level of a second pixel located at the second side, based on the boundary region. The processor 110 may interpolate a gray scale of the first pixel and interpolate a gray scale of the second pixel by using the intermediate gray scale. Here, an operation of interpolating a gray scale may indicate increasing or decreasing a color level of a pixel. The processor 110 may alleviate a contour in the boundary region by reducing a gray scale difference between pixels present in the boundary region.

The processor 110 may detect a boundary region in which a gray scale difference between a first pixel and a second pixel included in the original image 910 is equal to or greater than a pre-set value. Alternatively, the processor 110 may detect a boundary region in which a gray scale difference between a first pixel and a second pixel included in the intermediate image 920 is equal to or greater than a pre-set value.

According to an embodiment of the disclosure, it is illustrated that the contour interpolation 840 is performed on a blurred image on which the blurring 820 has been performed (the intermediate image 920), but is not limited thereto. For example, the contour interpolation 840 may be performed before the blurring 820. Also, the second sub-pipeline 522 may further include dithering.

According to an embodiment of the disclosure, when generation of a contour is predicted in the input image 801, the processor 110 may input the input image 801 to the second sub-pipeline 522 that is an example of the second pipeline 520. The processor 110 may generate the blurred image 802 according to the second sub-pipeline 522.

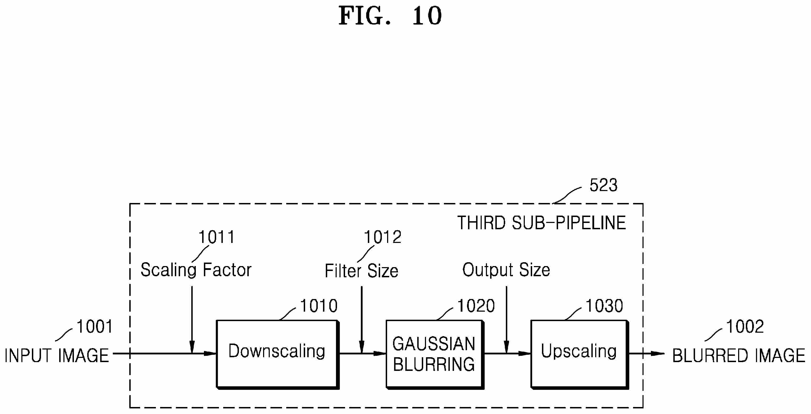

FIG. 10 is a block diagram for describing an example of a second blurring process according to an embodiment of the disclosure. Details that overlap those of FIG. 6 are not provided again in FIG. 10.

FIG. 10 illustrates the second pipeline 520 corresponding to the second blurring process. The second pipeline 520 may include the third sub-pipeline 523. The third sub-pipeline 523 may include downscaling 1010, blurring 1020, and upscaling 1030 for an input image 1001. The third sub-pipeline 523 may generate a blurred image 1002 by processing the input image 1001.

The input image 1001 may be an image with a contour generation possibility when a blurring process is performed thereon.

Second blurring intensity of the blurred image 1002 generated through the third sub-pipeline 523 may be lower than first blurring intensity of the blurred image 602 generated through the first pipeline 510 of FIG. 6.

For example, a scaling factor 1011 of the downscaling 1010 used in the third sub-pipeline 523 may be smaller than a scaling factor of the downscaling 610 used in the first pipeline 510.

For example, a filter size 1012 of the blurring 1020 used in the third sub-pipeline 523 may be smaller than a filter size of the blurring 620 used in the first pipeline 510.

When blurring intensity of a blurred image is low, contour visibility of the blurred image may decrease. The processor 110 may decrease the blurring intensity of the blurred image 1002 through the third sub-pipeline 523, thereby minimizing a contour visible to the user.

The third sub-pipeline 523 may further include dithering.

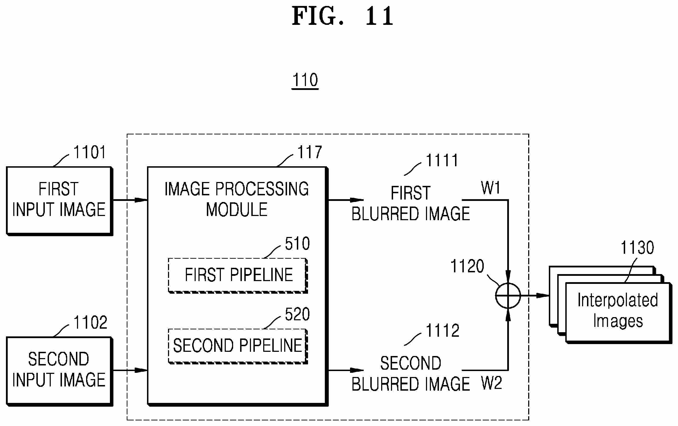

FIG. 11 is a block diagram for describing a blurring process for a video image, according to an embodiment of the disclosure. Details that overlap those of FIGS. 6 to 10 are not provided again in FIG. 11.

Referring to FIG. 11, when an input image is a video image, images of a same format may be continuously input.

For example, a first input image 1101 and a second input image 1102 may have a same format, and may be continuously input to the image processing module 117. The first input image 1101 and the second input image 1102 may be an image frame included in a video image. Here, when an input image has a YUV format that is a video format, the input image may be converted into a graphic format before being processed in a pipeline.

Each of the first input image 1101 and the second input image 1102 may be an image where a contour is predicted or not predicted.

The processor 110 may predict whether a contour is to be generated in each of the first input image 1101 and the second input image 1102 through the contour prediction model 113, and input each of the first input image 1101 and the second input image 1102 to the first pipeline 510 or the second pipeline 520.

The processor 110 may perform a blurring process on each of the first input image 1101 and the second input image 1102 in the first pipeline 510 or the second pipeline 520, thereby generating a first blurred image 1111 and a second blurred image 1112.

The processor 110 may perform frame interpolation 1120 on the first blurred image 1111 and the second blurred image 1112. The processor 110 may generate interpolated images 1130 may interpolating the first blurred image 1111 and the second blurred image 1112. The frame interpolation 1120 may include linear interpolation, but is not limited thereto.

The processor 110 may generate a video image with a high frame rate by performing a blurring process for each image frame and performing interpolation according to a time difference between the image frames. For example, the processor 110 may generate a video image of 60 frames per second (fps) in response to four input images obtained per second.

Hereinafter, referring to FIGS. 12 and 13, operations in which the display apparatus 100 provides training data to the contour prediction model 113 and obtains the updated contour prediction model 113 will be described.

FIG. 12 is a flowchart of a method of providing training data to a contour prediction model, according to an embodiment of the disclosure.

Referring to FIG. 12, in operation 1210, the display apparatus 100 may generate a blurred image by performing a blurring process on a training image.

The training image may include a broadcasting stream, a video stream, a video image, a graphic image, and the like. The training image may be stored in a buffer.

The blurred image may be a blur-processed image of the training image. The display apparatus 100 may generate the blurred image by applying a first blurring process on the training image. However, the blurring process is not limited to the first blurring process.

The blurred image may include or not include a contour.

According to an embodiment of the disclosure, the display apparatus 100 may obtain the blurred image through the image processing module 117 of FIG. 5.

In operation 1220, the display apparatus 100 may obtain feedback on a contour generation result of the blurred image.

According to an embodiment of the disclosure, the display apparatus 100 may receive the feedback of a user through a user interface including an inquiry about whether a contour is generated in the blurred image.

For example, the display apparatus 100 may display the blurred image and display a user interface including an inquiry about whether a contour is visible in the blurred image. When a contour is visible in the blurred image, the user may input, to the display apparatus 100, a response thereto, for example, Yes a visibility probability (%), a visibility level, or the like. Alternatively, when a contour is not visible in the blurred image, the user may input, to the display apparatus 100, a response thereto, for example, No or visibility probability (%), a visibility level, or the like. The display apparatus 100 may obtain the feedback of the user, corresponding to the input of the user, obtained through the user interface. The display apparatus 100 may obtain feedback of the user for each training image.

According to an embodiment of the disclosure, the display apparatus 100 may obtain the feedback in response to the contour generation result of the blurred image, which is obtained through a contour detection algorithm.

For example, the display apparatus 100 may input the blurred image to the contour detection algorithm. The contour detection algorithm may output whether a contour is present in the blurred image. The blurred image may be captured by an internal camera or an external camera of the display apparatus 100 and input to the contour detection algorithm, but is not limited thereto.

For example, the display apparatus 100 may obtain, through the contour detection algorithm, generation of a contour (Yes or No) or a contour generation probability (%), a contour generation level, or the like for the blurred image. The display apparatus 100 may obtain the feedback corresponding to an output of the contour detection algorithm.

For example, the contour detection algorithm may assign a color buffer region of the blurred image and then calculate a contour by using a difference between adjacent pixels inside the color buffer region. Alternatively, the contour detection algorithm may calculate a contour by using complexity of a pixel value. Alternatively, the contour detection algorithm may include a neural network model (a contour detection model) for inferring a contour of a blurred image. The contour detection algorithm is not limited thereto and may include a logic, circuit, interface, and/or code suitable for determining a contour of a blurred image.

The contour detection algorithm differs from a contour prediction model in that it is detected whether a contour is present in a blur-processed image. The contour prediction model may predict whether a contour will be generated when an image before a blurring process is blur-processed.

According to an embodiment of the disclosure, the display apparatus 100 may label the obtained feedback. For example, the display apparatus 100 may label the feedback by assigning a label of 1 in response to generation of a contour and assigning a label of 0 in response to no generation of a contour.

For example, when the obtained feedback is a real number between 0 and 1 or a percentage value between 0% and 100%, the display apparatus 100 may compare the feedback with a threshold and assign a label of 0 or 1. Alternatively, for example, when the obtained feedback is Yes or No, the display apparatus 100 may assign a label of 1 or 0. Alternatively, for example, the display apparatus 100 may assign a label (e.g., 0.5) between 0 and 1 in response to the feedback.

According to an embodiment of the disclosure, the display apparatus 100 may obtain the feedback through a feedback obtaining module 1310 of FIG. 13. The feedback obtaining module 1310 may assign a label to the feedback.

In operation 1230, the display apparatus 100 may generate image embedding by converting the training image into a vector representation.

Embedding denotes data obtained by compressing existing image information through a neural network. The embedding is represented in a vector and may be indicated in the form of a list of numerical values in a standardized form. Image embedding denotes an image converted into a vector representation.

For example, the display apparatus 100 may perform tokenization of dividing data belonging to a training image into small unit elements, and convert each token into an intrinsic vector value.

According to an embodiment of the disclosure, the display apparatus 100 may generate the image embedding through an embedding processing module 1320 of FIG. 13.

In operation 1240, the display apparatus 100 may provide the image embedding and the label corresponding to the feedback, as training data of the contour prediction model.

According to an embodiment of the disclosure, the display apparatus 100 may provide, to the contour prediction model, the image embedding generated by converting the training image into the vector representation. For example, when the contour prediction model is trained by an external server for artificial intelligence learning, the display apparatus 100 may provide the image embedding to the external server.

According to an embodiment of the disclosure, the display apparatus 100 may not transmit the training image to the external server but may transmit the image embedding obtained by converting the training image into the vector representation, thereby reducing data throughput of the external server.

According to an embodiment of the disclosure, the display apparatus 100 may store the training image and the label including the feedback on the training image, in association with each other. The display apparatus 100 may transmit, to the external server, the training image and the label in association with each other.

For example, the display apparatus 100 may represent vector values corresponding to the training image and the label in one vector. For example, the image embedding may include not only information about the training image, but also label information about the training image. For example, the image embedding may be represented in the form of a list of the vector values and label corresponding to the training image. The display apparatus 100 may transmit, to the external server, the image embedding including the label information.

Alternatively, according to an embodiment of the disclosure, the display apparatus 100 may separately store training images in which a label is 0 and training images in which a label is 1. The display apparatus 100 may separately transmit, to the external server, image embedding corresponding to the training image in which the label is 0 and image embedding corresponding to the training image in which the label is 1.

The contour prediction model may use, as the training data, the image embedding corresponding to the training image and the label corresponding to the feedback obtained for each training image.

The contour prediction model may be reinforcement-learned through the training data. The contour prediction model may be trained by using, as the training data, a pair of the image embedding and the label. The contour prediction model may be trained by using feedback on whether a classification result of the training image is correct. For example, the contour prediction model may predict a contour generation possibility (inference result) of the training image and learn whether the inference result is correct by using the inference result and the label that is an actual result.

However, an embodiment of the disclosure is not limited thereto, and the contour prediction model may be a supervised learning model or an unsupervised learning model.

According to an embodiment of the disclosure, the display apparatus 100 may periodically provide the training data to the contour prediction model and obtain the contour prediction model updated accordingly. For example, the contour prediction model may be trained by the external server and distributed to an embedded system. The contour prediction model may be executed in the embedded system and the display apparatus 100 may execute the contour prediction model stored in memory through the processor 110.

FIG. 13 is a diagram for describing a method of performing reinforcement learning on a contour prediction model by using training data, according to an embodiment of the disclosure.

Referring to FIG. 13, the processor 110 may include the image processing module 117, the feedback obtaining module 1310, and the embedding processing module 1320. For example, the processor 110 may execute one or more instructions stored in memory to perform operations corresponding to the image processing module 117, the feedback obtaining module 1310, and/or the embedding processing module 1320.

The image processing module 117 may generate a blurred image by performing blurring process on a training image. For example, the blurring process may be performed on the training image through a first pipeline (e.g., the first pipeline 510).

The image processing module 117 may transmit the blurred image to the feedback obtaining module 1310.

The feedback obtaining module 1310 may obtain feedback on a contour generation result of the blurred image through the blurred image obtained from the image processing module 117.

For example, the feedback obtaining module 1310 may receive the feedback of a user through a user interface including an inquiry about whether a contour is to be generated in the blurred image.

Alternatively, for example, the feedback obtaining module 1310 may obtain the contour generation result of the blurred image through a contour detection algorithm. The feedback obtaining module 1310 may obtain the feedback in response to the contour generation result.

The feedback for the blurred image may include generation of a contour in the blurred image (Yes or No) or a contour generation probability (%), a contour generation level, and the like.

The feedback obtaining module 1310 may label the obtained feedback. For example, the feedback obtaining module 1310 may label the feedback by assigning a label of 1 in response to generation of a contour and assigning a label of 0 in response to no generation of a contour.

The feedback obtaining module 1310 may transmit the label corresponding to the feedback to the embedding processing module 1320.

The embedding processing module 1320 may generate image embedding by converting the training image into a vector representation. The embedding processing module 1320 may obtain the label in response to the feedback evaluated for each training image.

The embedding processing module 1320 may store the training image and the label in association with each other. For example, the embedding processing module 1320 may represent the training image and the label in one vector. In this case, the image embedding may be represented in the form of a list of the vector values and label corresponding to the training image. Alternatively, for example, the embedding processing module 1320 may classify and store training images having a same label. A method of associating the training image and the label with each other is not limited to the above examples. A table 1301 is an example of a label associated with a training image.

The processor 110 may transmit, to a contour prediction model 1330, the image embedding and the label associated with the image embedding generated by the embedding processing module 1320, as training data. For example, when the contour prediction model 1330 is trained by an external server, the processor 110 may transmit the training data to the external server. For example, the processor 110 may transmit the training data to the external server through a communication module or an input/output unit.

The processor 110 may obtain the contour prediction model 1330 trained by using the training data. The contour prediction model 1330 may be periodically updated through the training data received periodically.

FIG. 14 illustrates an example of a situation in which the display apparatus 100 performs a blurring process on an image, according to an embodiment of the disclosure.

Referring to FIG. 14, the display apparatus 100 may output, on the display 130, a composite image 1403 obtained by mixing a video image 1401 and a graphic image 1402. For example, the video image 1401 may be an image corresponding to content and the graphic image 1402 may include an on-screen display (OSD), a subtitle, or a sub-window. For example, the video image 1401 may be generated on a video plane for processing a YUV color space, and the graphic image 1402 may be generated on a graphic plane for processing an RGB or RGBA color space. The display apparatus 100 may generate the composite image 1403 by combining the video image 1401 generated on the video plane and the graphic image 1402 generated on the graphic plane. The graphic plane may be present on the video plane.

The display apparatus 100 may output, on the display 130, the composite image 1403 on which a blurring process has been performed by applying a blurring effect on the composite image 1403. For example, the display apparatus 100 may output an image on which a blurring effect has been applied when generating a screen such as a home background or a setting menu.

To output the composite image 1403 on which the blurring process has been performed, the display apparatus 100 may perform the blurring process on each of the video image 1401 and the graphic image 1402, and then mix the video image 1401 and the graphic image 1402 on which the blurring processes have been performed. For example, the display apparatus 100 may output, on the display 130, the composite image 1403 including a blur non-display area 1411 and a blur display area 1412. A video image may be displayed in the blur non-display area 1411 and an image obtained by combining a video image and a graphic image, on which blurring processes have been performed, may be displayed in the blur display area 1412.

According to an embodiment of the disclosure, a contour (e.g., an area 1413) may be generated in the blur display area 1412. The contour generated at hardware after the blurring process may not be sufficiently removed according to a first blurring process.

The display apparatus 100 may predict a contour generation possibility of the composite image 1403 through the contour prediction model 113 and apply a second blurring process when a contour is predicted. The display apparatus 100 may predict the contour generation possibility of the composite image 1403 and perform the second blurring process to prevent generation of a contour.

Accordingly, the display apparatus 100 may output the composite image 1403 in which a contour is minimized.

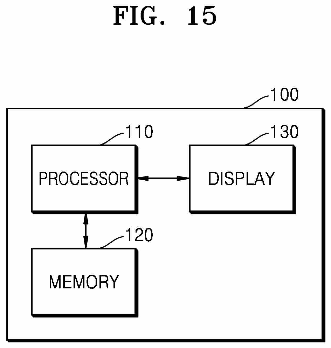

FIG. 15 is a schematic block diagram of the display apparatus 100 according to an embodiment of the disclosure.

Referring to FIG. 15, the display apparatus 100 according to an embodiment of the disclosure may include the processor 110, memory 120, and the display 130. However, the display apparatus 100 is not limited thereto and may include more or fewer components than those of FIG. 15. Also, a function performed by each block is only for describing an embodiment of the disclosure and specific operations or devices do not limit the scope of right of the disclosure.

The processor 110 according to an embodiment of the disclosure controls general operations of the display apparatus 100 and a signal flow between internal components of the display apparatus 100, and performs a function of processing data.

The processor 110 may include a single core, a dual core, a triple core, a quad core, or a multiple core. Also, the processor 110 may include a plurality of processors. For example, the processor 110 may be implemented by a main processor and a sub processor.

Also, the processor 110 may include at least one of a CPU, a GPU, or a VPU. Alternatively, according to an embodiment of the disclosure, the processor 110 may be implemented in the form of an SoC in which at least one of CPU, GPU, or VPU is integrated. Alternatively, the processor 110 may further include an NPU.

The memory 120 according to an embodiment of the disclosure may store various types of data, programs, or applications for driving and controlling the display apparatus 100.

Also, the program stored in the memory 120 may include one or more instructions. The program (one or more instructions) or application stored in the memory 120 may be executed by the processor 110.

The processor 110 according to an embodiment of the disclosure may execute the one or more instructions stored in the memory 120 to obtain an input image.

The processor 110 according to an embodiment of the disclosure may execute the one or more instructions stored in the memory 120 to obtain a contour prediction result including information of predicting whether a contour is to be generated in the input image by inputting the input image to the contour prediction model 113.

The processor 110 according to an embodiment of the disclosure may execute the one or more instructions stored in the memory 120 to perform at least one of a first blurring process or a second blurring process different from the first blurring process on the input image, based on the contour prediction result.

The processor 110 according to an embodiment of the disclosure may execute the one or more instructions store din the memory 120 to output a contour generation probability of the input image through the contour prediction model 113.

The processor 110 according to an embodiment of the disclosure may execute the one or more instructions stored in the memory 120 to perform the first blurring process on the input image, based on the contour generation probability being less than a threshold.

The processor 110 according to an embodiment of the disclosure may execute the one or more instructions stored in the memory 120 to perform the second blurring process on the input image, based on the contour generation probability being equal to or greater than the threshold.

The processor 110 according to an embodiment of the disclosure may execute the one or more instructions stored in the memory 120 to generate image embedding by converting the input image into a vector representation.

The processor 110 according to an embodiment of the disclosure may execute the one or more instructions stored in the memory 120 to input the image embedding to the contour prediction model 113.

The processor 110 according to an embodiment of the disclosure may execute the one or more instructions store din the memory 120 to output a contour prediction result of the input image through the contour prediction model 113.

The first blurring process according to an embodiment of the disclosure may include downscaling, blurring, and upscaling of the input image.

The second blurring process according to an embodiment of the disclosure may include dimming for lowering a color gray scale of a blurred image according to the first blurring process.

The second blurring process according to an embodiment of the disclosure may include contour interpolation of the blurred image.

The contour interpolation according to an embodiment of the disclosure may include an operation of detecting a boundary region where a gray scale difference between a first pixel and a second pixel included in the input image is equal to or greater than a preset value, and an operation of interpolating an intermediate gray scale between a gray scale of the first pixel and a gray scale of the second pixel in the boundary region.

The second blurring process according to an embodiment of the disclosure may include downscaling, blurring, and upscaling of the input image, wherein second blurring intensity used in the second blurring process may be lower than first blurring intensity used in the first blurring process.

A second scaling factor used in the second blurring process according to an embodiment of the disclosure may be smaller than a first scaling factor used in the first blurring process.

A size of a second blur filter used in the second blurring process according to an embodiment of the disclosure may be smaller than a size of a first blur filter used in the first blurring process.

In the input image according to an embodiment of the disclosure, a blurred image on which the second blurring process has been performed includes fewer contours than a blurred image on which the first blurring process has been performed.

The processor 110 according to an embodiment of the disclosure may execute the one or more instructions stored in the memory 120 to generate a blurred image by performing a blurring process on a training image.

The processor 110 according to an embodiment of the disclosure may execute the one or more instructions stored in the memory 120 to obtain feedback on a contour generation result of the blurred image.

The processor 110 according to an embodiment of the disclosure may execute the one or more instructions stored in the memory 120 to generate image embedding by converting the training image into a vector representation.

The processor 110 according to an embodiment of the disclosure may execute the one or more instructions stored in the memory 120 to provide the image embedding and a label corresponding to the feedback, as training data of the contour prediction model 113.

The processor 110 according to an embodiment of the disclosure may execute the one or more instructions stored in the memory 120 to perform an operation of receiving the feedback of a user through a user interface including an inquiry about whether a contour is to be generated in the blurred image. The processor 110 according to an embodiment of the disclosure may execute the one or more instructions stored in the memory 120 to perform an operation of obtaining the feedback, based on a contour generation result of the blurred image, which is obtained through a contour detection algorithm. The processor 110 according to an embodiment of the disclosure may perform at least one of the above-described operations.

The input image according to an embodiment of the disclosure may include a video image on which an image process has been performed in a YUV color space and/or a graphic image on which an image process has been performed in an RGB or RGBA color space.

The display 130 according to an embodiment of the disclosure outputs an image on a screen. In particular, the display 130 may output an image corresponding to video data or an image signal via a display panel included therein such that the user visually recognizes the video data.

The display 130 according to an embodiment of the disclosure may output the blurred image according to control by the processor 110. The blurred image output on the display 130 may have minimized color banding and contour.

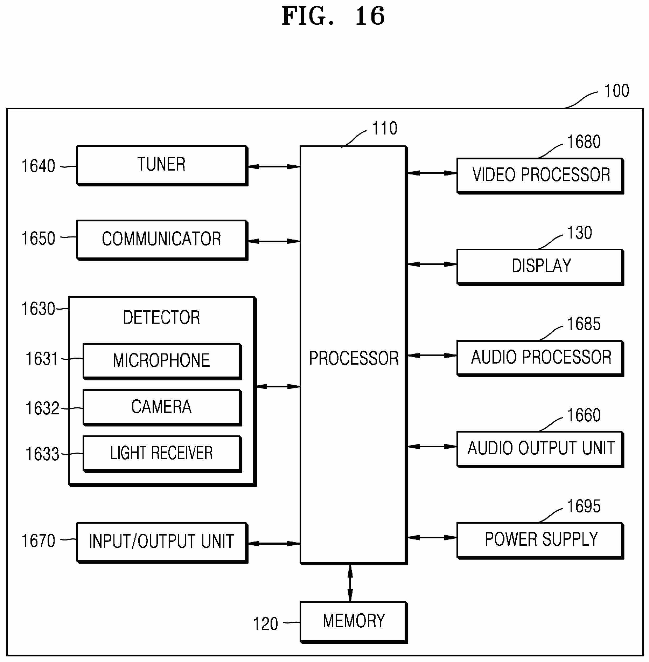

FIG. 16 is a detail block diagram of the display apparatus 100 according to an embodiment of the disclosure.

Referring to FIG. 16, the display apparatus 100 may include a tuner 1640, the processor 110, the display 130, a communicator 1650, a detector 1630, an input/output unit 1670, a video processor 1680, an audio processor 1685, an audio output unit 1660, the memory 120, and a power supply 1695.

The tuner 1640 according to an embodiment of the disclosure may tune and select only a frequency of a channel to be received by the display apparatus 100 among many radio wave components by performing amplification, mixing, and resonance on a broadcast signal received via wires or wirelessly. The broadcast signal includes audio, video, and additional information (for example, an electronic program guide (EPG)).

The tuner 1640 may receive a broadcast signal from various sources, such as terrestrial broadcasting, cable broadcasting, satellite broadcasting, and Internet broadcasting. The tuner 1640 may receive a broadcast signal from a source such as analog broadcasting or digital broadcasting.

The communicator 1650 may transmit and receive data or a signal to and from an external device or a server. For example, the communicator 1650 may include a Wi-Fi module, a Bluetooth module, an infrared communication module, a wireless communication module, a local area network (LAN) module, an Ethernet module, or a wired communication module. Here, each communication module may be implemented in the form of at least one hardware chip.

The Wi-Fi module and the Bluetooth module may communicate through a W-Fi method and a Bluetooth method, respectively. When the Wi-Fi module or the Bluetooth module is used, various types of connection information, such as a service set identifier (SSID) or a session key, may be transmitted or received first, communication may be connected by using the same, and then various types of information may be transmitted or received. The wireless communication module may include at least one communication chip performing communication according to various wireless communication standards, such as ZigBee, 3rd generation (3G), 3G partnership project (3GPP), long-term evolution (LTE), LTE advanced (LTE-A), 4th generation (4G), and 5th generation (5G).

The detector 1630 according to an embodiment of the disclosure may detect a speech of a user, an image of the user, or an interaction of the user, and may include a microphone 1631, a camera 1632, and a light receiver 1633.

The microphone 1631 receives voice uttered by the user. The microphone 1631 may convert the received voice into an electric signal and output the electric signal to the processor 110.

The light receiver 1633 receives an optical signal (including a control signal) received from an external control device via a light window of a bezel of the display 130. The light receiver 1633 may receive an optical signal corresponding to a user input (for example, touch, press, touch gesture, speech, or motion) from the control device. A control signal may be extracted from the received light signal under control by the processor 110.

The input/output unit 1670 according to an embodiment of the disclosure may receive video (e.g., a moving image), audio (e.g., speech or music), and additional information (e.g., electronic program guide (EPG)) from the outside of the display apparatus 100. The input/output unit 1670 may include any one of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a PC port.

The video processor 1680 according to an embodiment of the disclosure performs processing on video data received by the display apparatus 100. The video processor 1680 may perform various image processes, such as decoding, scaling, noise removal, frame rate converting, and resolution converting, on the video data.

Also, the processor 110 may include at least one of a CPU, a GPU, or a VPU. Alternatively, according to an embodiment of the disclosure, the processor 110 may be implemented in the form of an SoC in which at least one of CPU, GPU, or VPU is integrated. Alternatively, the processor 110 may further include an NPU.

The memory 120 according to an embodiment of the disclosure may store various types of data, programs, or applications for driving and controlling the display apparatus 100.

Also, the program stored in the memory 120 may include one or more instructions. The program (one or more instructions) or application stored in the memory 120 may be executed by the processor 110.

The processor 110 according to an embodiment of the disclosure may execute the one or more instructions stored in the memory 120 to obtain an input image. The input image may be an image pre-stored in the memory 120 or an image received from an external device through the tuner 1640 or the communicator 1650. Also, the input image may be an image on which various types of image processes have been performed by the video processor 1680, such as decoding, scaling, noise removal, frame rate conversion, resolution conversion, and the like.

The display 130 according to an embodiment of the disclosure may generate a driving signal by converting an image signal, a data signal, an on-screen display (OSD) signal, or a control signal processed by the processor 110. The display 130 may be implemented as a plasma display panel (PDP), a liquid crystal display (LCD), an organic LED (OLED), or a flexible display, or may be implemented as a 3-dimensional (3D) display. The display 130 may be configured as a touch screen to be used as an input device as well as an output device.

The audio processor 1685 performs a process on audio data. The audio processor 1685 may perform various processes, such as decoding, amplification, or noise removal, on the audio data. The audio processor 1685 may include a plurality of audio processing modules to process audio corresponding to a plurality of pieces of content.

The audio output unit 1660 outputs audio included in a broadcast signal received via the tuner 1640 under control by the processor 110. The audio output unit 1660 may output the audio (for example, speech or sound) input through the communicator 1650 or the input/output unit 1670. Also, the audio output unit 1660 may output audio stored in the memory 120 under control by the processor 110. The audio output unit 1660 may include at least one of a speaker, a headphone output terminal, or a Sony/Philips digital interface (S/PDIF) terminal.

The power supply 1695 supplies power input from an external power source to components inside the display apparatus 100 under control by the processor 110. Also, the power supply 1695 may supply power output from one or more batteries located inside the display apparatus 100 to the components inside the display apparatus 100 under control by the processor 110.

The memory 120 may store various types of data, programs, or applications for driving and controlling the display apparatus 100 under control by the processor 110. The memory 120 may include a broadcast receiving module, a channel control module, a volume control module, a communication control module, a voice recognition module, a motion recognition module, a light receiving module, a display control module, an audio control module, an external input control module, a power control module, a power control module of an external device connected wirelessly (for example, Bluetooth), a voice database (DB), or a motion DB. The processor 110 may perform each function by using the software stored in the memory 120.

An operating method of the display apparatus 100, according to an embodiment of the disclosure, includes obtaining an input image (operation 310), obtaining a contour prediction result including information of predicting whether a contour is to be generated in the input image by inputting the input image to the contour prediction model 113 (operation 320), and performing at least one of a first blurring process or a second blurring process different from the first blurring process on the input image, based on the contour prediction result (operation 330).

The obtaining of the contour prediction result (operation 320), according to an embodiment of the disclosure, may include outputting a contour generation probability for the input image through the contour prediction model 113, performing the first blurring process on the input image when the contour generation probability is less than a preset probability, and performing the second blurring process on the input image when the contour generation probability is equal to or greater than the preset probability.

The obtaining of the contour prediction result (operation 320), according to an embodiment of the disclosure, may include generating image embedding by converting the input image into a vector representation, inputting the image embedding to the contour prediction model 113, and outputting the contour prediction result for the input image through the contour prediction model 113.

The first blurring process according to an embodiment of the disclosure may include downscaling, blurring, and upscaling of the input image.

The second blurring process according to an embodiment of the disclosure may include dimming for lowering a color gray scale of a blurred image according to the first blurring process.

The second blurring process according to an embodiment of the disclosure may further include a contour interpolation operation for the blurred image, wherein the contour interpolation operation may include an operation of detecting a boundary region where a gray scale difference between a first pixel and a second pixel included in the input image is equal to or greater than a preset value, and an operation of interpolating an intermediate gray scale between a gray scale of the first pixel and a gray scale of the second pixel in the boundary region.

The second blurring process according to an embodiment of the disclosure may include downscaling, blurring, and upscaling of the input image, wherein second blurring intensity used in the second blurring process is lower than first blurring intensity used in the first blurring process.

The operating method of the display apparatus 100, according to an embodiment of the disclosure, may further include providing training data to the contour prediction model 113.

The providing of the training data to the contour prediction model 113, according to an embodiment of the disclosure, may include generating a blurred image by performing a blurring process on a training image (operation 1210), obtaining feedback on a contour generation result of the blurred image (operation 1220), generating image embedding by converting the training image into a vector representation (operation 1230), and providing a label corresponding to the image embedding and the feedback to the contour prediction model 113, as training data (operation 1240).

The machine-readable storage medium may be provided in the form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment of the disclosure, a method according to an embodiment of the disclosure disclosed in the present specification may be provided by being included in a computer program product. The computer program products are products that can be traded between sellers and buyers. The computer program product may be distributed in the form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or memory of a relay server.

## Claims

1. A display apparatus (100) comprising:
at least one memory (120) storing one or more instructions; and
at least one processor (110) configured to execute the one or more instructions,
wherein the one or more instructions, when executed by the at least one processor (110), cause the display apparatus (100) to:
obtain an input image,
obtain a contour prediction result comprising information related to a prediction of whether a contour would be generated in an image output by the display apparatus (100) based on the input image by inputting the input image to the contour prediction model (113), and
based on the contour prediction result, perform at least one of a first blurring process or a second blurring process on the input image, wherein the first blurring process is different from the second blurring process.

2. The display apparatus (100) of claim 1,
wherein the contour prediction result comprises a contour generation probability, the contour generation probability comprising a probability that a contour would be generated in an image output by the display apparatus (100) based on the input image, and
wherein the one or more instructions, when executed by the at least one processor (110), cause the display apparatus (100) to:
based on the contour generation probability being less than a threshold, perform the first blurring process on the input image, and
based on the contour generation probability being equal to or greater than the threshold, perform the second blurring process on the input image.

3. The display apparatus (100) of claim 1 or 2, wherein the one or more instructions, when executed by the at least one processor (110), cause the display apparatus (100) to:
obtain the contour prediction result by converting the input image into a vector representation to generate image embedding and inputting the image embedding into the contour prediction model (113).

4. The display apparatus (100) of any one of claims 1 to 3,
wherein the first blurring process comprises downscaling, blurring, and upscaling the input image, and
the second blurring process comprises downscaling, blurring, and upscaling the input image to generate a blurred image, and lowering a color gray scale of the blurred image through dimming.

5. The display apparatus (100) of any one of claims 1 to 4,
wherein the second blurring process comprises contour interpolation of a blurred image generated by blurring the input image, wherein the contour interpolation comprises detecting a boundary region where a gray scale difference between a first pixel and a second pixel included in the input image is equal to or greater than a preset value, and interpolating an intermediate gray scale between a gray scale of the first pixel and a gray scale of the second pixel in the boundary region.

6. The display apparatus (100) of any one of claims 1 to 5,
wherein the second blurring process comprises downscaling, blurring, and upscaling the input image, and
wherein a second blurring intensity used in the second blurring process is lower than a first blurring intensity used in the first blurring process.

7. The display apparatus (100) of claim 6, wherein a second scaling factor used in the second blurring process is smaller than a first scaling factor used in the first blurring process.

8. The display apparatus (100) of claim 6 or 7, wherein a size of a second blur filter used in the second blurring process is smaller than a size of a first blur filter used in the first blurring process.

9. The display apparatus (100) of any one of claims 1 to 8, wherein a blurred image generated by performing the second blurring process on the input image includes fewer contours than a blurred image generated by performing the first blurring process on the input image.

10. The display apparatus (100) of any one of claims 1 to 9, wherein the one or more instructions, when executed by the at least one processor (110), cause the display apparatus (100) to:
generate a blurred image by performing a blurring process on a training image,
obtain feedback on a contour generation result of the blurred image,
generate image embedding by converting the training image into a vector representation, and
provide the image embedding and a label corresponding to the feedback to the contour prediction model (113) as training data.

11. The display apparatus (100) of claim 10, wherein the one or more instructions, when executed by the at least one processor (110), cause the display apparatus (100) to:
obtain at least one of an user feedback through a user interface including an inquiry about whether a contour is generated in the blurred image, or the feedback corresponding to a contour generation result of the blurred image, obtained through a contour detection algorithm.

12. The display apparatus (100) of any one of claims 1 to 11, wherein the input image comprises a video image on which an image process has been performed in a YUV color space or a graphic image on which an image process has been performed in an RGB or an RGBA color space.

13. An operating method of a display apparatus (100), the operating method comprising:
obtaining an input image (310);
obtaining a contour prediction result comprising information related to a prediction of whether a contour would be generated in an image output by the display apparatus (100) based on the input image by inputting the input image to the contour prediction model (113) (320); and
based on the contour prediction result, performing at least one of a first blurring process or a second blurring process on the input image, wherein the first blurring process is different from the second blurring process (330).

14. The operating method of claim 13,
wherein the contour prediction result comprises a contour generation probability, the contour generation probability comprising a probability that a contour would be generated in an image output by the display apparatus (100) based on the input image, and
wherein the operating method further comprises:
based on the contour generation probability being less than a preset probability, performing the first blurring process on the input image; and
based on the contour generation probability being equal to or greater than the preset probability, performing the second blurring process on the input image.

15. A non-transitory computer readable medium having instructions stored therein, which when executed by at least one processor cause the at least one processor to execute a operating method of claim 13 or 14.
